# FASCICULE DE BREVET EUROPEEN

(11) **EP 2 190 111 B1**
(45) Date de publication et mention de la délivrance du brevet: **02.09.2020**
(21) Numéro de dépôt: 09173091.1
(22) Date de dépôt: 15.10.2009
(51) Int. Cl.: H02P 9/08, H02P 9/10, F02N 11/00, F02N 11/10, F02D 41/20

(54) **Procédé de limitation de courant d'excitation maximum dans un système à alterno-démarreur**
Begrenzungsverfahren des maximalen Erregerstroms in einem System mit Wechselanlasser
Method for limiting the maximum excitation current in a system with an alternator-starter

(30) Priorité: 24.11.2008 FR 0857970
(43) Date de publication de la demande: 26.05.2010
(73) Titulaire: Valeo Equipements Electriques Moteur, 94046 Créteil Cedex (FR)
(72) Inventeur: Granziera, Cyril, 75015 Paris (FR)

(56) Documents cités:
- EP-A- 1 098 420
- EP-A- 1 717 944
- FR-A- 2 855 665
- FR-A- 2 910 191
- US-B1- 6 414 832

## Description

La présente invention est applicable de manière générale dans le domaine automobile. Plus particulièrement, l'invention concerne un procédé de limitation d'un courant d'excitation maximum dans un système à alterno-démarreur pour véhicule.

Le document EP1717944 décrit un procédé de limitation du courant maximum d'excitation en fonction de la vitesse de rotation de l'alterno-démarreur.

Le document EP1098420 décrit un procédé de régulation de la tension de sortie de l'alternateur en fonction de la température de la batterie chargée par l'alternateur.

Le document US6414832 décrit un procédé de limitation du courant d'excitation lorsque la température dépasse un seuil prédéterminé.

Dans les alternateurs classiques, la limitation du courant d'excitation maximum du rotor bobiné en fonction de la température de la machine est obtenue de manière simple par le dimensionnement du courant d'excitation correspondant à un rapport cyclique de 100% d'un signal modulé en largeur d'impulsion (dit PWM en anglais) et par le dimensionnement de la résistance électrique du rotor. Lorsque la Dans un alterno-démarreur, c'est le fonctionnement en mode moteur qui détermine habituellement la résistance électrique du rotor. En effet, la puissance de la machine doit être importante pour démarrer le moteur à combustion interne du véhicule et cela détermine une résistance électrique du rotor qui doit être faible. Lorsque l'alterno-démarreur fonctionne en mode alternateur, cette résistance électrique faible du rotor n'est pas suffisante pour conduire, avec l'augmentation de la température, à une limitation du courant d'excitation.

Il est donc nécessaire de prévoir cette limitation du courant d'excitation à travers une limitation du rapport cyclique maximum de ce courant à une valeur de limitation inférieure à 100% qui est rendue dépendante de la température de la machine.

Selon un premier aspect, tel que défini à la revendication 1, l'invention propose un procédé de limitation d'un courant d'excitation maximum dans un système à alterno-démarreur pour véhicule. Conformément à l'invention, le courant d'excitation maximum est déterminé à partir d'au moins une courbe de limitation de courant d'excitation maximum préprogrammée dans un circuit électronique de commande du système à alterno-démarreur, la courbe de limitation de courant d'excitation maximum introduisant une limitation du courant d'excitation maximum en fonction de la température de l'alterno-démarreur.

La détermination en partie par calcul du courant d'excitation maximum autorise le maintien d'une mémoire de taille raisonnable dans le circuit électronique de commande. En effet, une cartographie complète en 3 dimensions demanderait une capacité mémoire importante. L'invention est donc parfaitement adaptée pour être mise en œuvre dans un circuit électronique de type ASIC ayant une capacité de mémoire relativement réduite.

Selon une caractéristique particulière, la courbe de limitation de courant d'excitation maximum comporte au moins une première portion qui est obtenue par calcul à partir d'une égalité qui est préprogrammée dans le circuit électronique de commande, cette première portion correspondant à une température de l'alterno-démarreur qui est comprise entre un premier seuil de température et un second seuil de température supérieur au premier seuil de température. De préférence, cette première portion correspond à une plage de réduction progressive du courant d'excitation maximum.

Selon encore une autre caractéristique, la courbe de limitation de courant d'excitation maximum comporte au moins une seconde portion correspondant à une plage de maintien à une valeur constante déterminée du courant d'excitation maximum, cette seconde portion correspondant à une température de l'alterno-démarreur ne dépassant pas le premier seuil de température.

Selon encore une autre caractéristique, la courbe de limitation de courant d'excitation maximum comporte au moins une troisième portion correspondant à un plage de réduction par palier du courant d'excitation maximum, cette troisième portion correspondant à une température de l'alterno-démarreur qui est comprise entre le second seuil de température et un seuil de température de sur-échauffement.

Selon encore une autre caractéristique, la courbe de limitation de courant d'excitation maximum comporte au moins une quatrième portion correspondant à un plage dans laquelle le courant d'excitation maximum a une valeur nulle, cette quatrième portion correspondant à une température de l'alterno-démarreur qui atteint ou dépasse une valeur de sur-échauffement.

De préférence, une vitesse de rotation de l'alterno-démarreur est également prise en compte pour déterminer le courant d'excitation maximum.

En outre, selon encore une autre caractéristique, la tension fournie par le système à alterno-démarreur est également prise en compte pour déterminer le courant d'excitation maximum.

Selon un autre aspect, l'invention concerne aussi un système à alterno-démarreur pour la mise en œuvre du procédé tel que défini brièvement ci-dessus.

Selon une première forme de réalisation, le système comprend, outre l'alterno-démarreur, un convertisseur analogique-numérique réversible et un circuit électronique de commande apte à autoriser un fonctionnement d'un moteur à combustion interne du véhicule selon un mode d'arrêt-relance automatique du moteur à combustion interne.

Selon une seconde forme de réalisation, le système comprend, outre l'alterno-démarreur, un convertisseur analogique-numérique réversible, une unité capacitive de stockage d'énergie et un circuit électronique de commande apte à autoriser un fonctionnement du véhicule selon un mode micro-hybride de freinage récupératif.

D'autres avantages et caractéristiques de la présente invention apparaîtront plus clairement à la lecture de la description ci-dessous de plusieurs formes de réalisation particulières en référence aux dessins annexés, dans lesquels :
- la Fig.1 est un bloc-diagramme général d'une forme de réalisation particulière d'un système à alterno-démarreur selon l'invention; et
- la Fig.2 montre une courbe de limitation du courant d'excitation implémentée dans le système de la Fig.1.

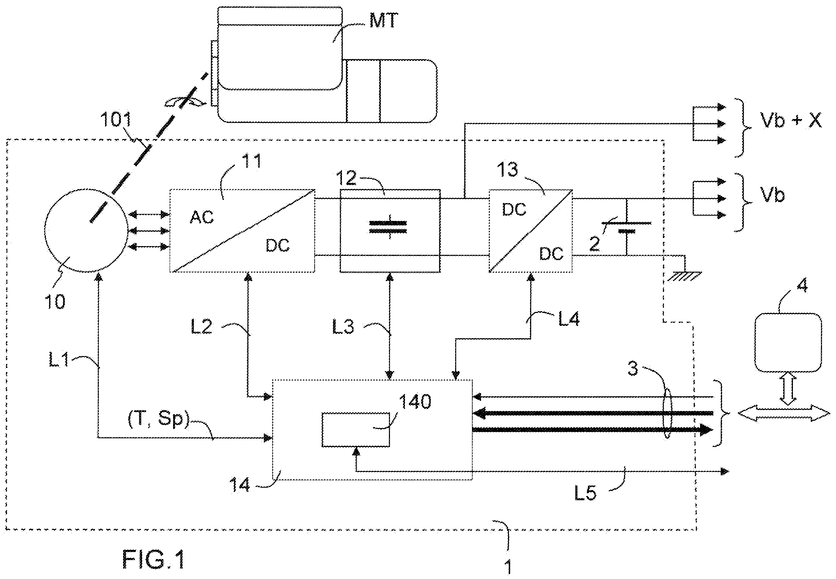

En référence à la Fig.1, il est maintenant décrit à titre d'exemple une forme de réalisation particulière 1 d'un système à alterno-démarreur selon l'invention. Le système 1 est un système micro-hybride à freinage récupératif construit autour d'un alterno-démarreur.

Comme montré à la Fig.1, dans cette forme de réalisation particulière, le système à alterno-démarreur 1 selon l'invention comprend essentiellement une machine électrique tournante 10 sous la forme d'un alterno-démarreur, un convertisseur alternatif-continu (AC/DC) réversible 11, une unité capacitive de stockage d'énergie électrique 12, un convertisseur de tension continu-continu (DC/DC) 13 et un circuit électronique de commande 14.

Le système à alterno-démarreur 1 est relié à un réseau de bord bi-tension du véhicule capable de fournir une tension continue basse Vb et une tension continue haute flottante Vb+X.

La tension continue basse Vb est généralement celle de 12 V d'une batterie au plomb 2 équipant le véhicule. De préférence, la tension Vb pourra être utilisée pour alimenter dans le véhicule des consommateurs demandant une valeur de tension relativement stable, tels que les dispositifs d'éclairage et de signalisation.

Dans cette forme particulière de réalisation particulière, la tension continue Vb+X varie par exemple entre 12 et 60 V et est disponible aux bornes de l'unité capacitive de stockage d'énergie 12 dont la charge en tension est dépendante notamment du fonctionnement en freinage récupératif de la machine électrique tournante 10.

La tension Vb+X peut être utilisée prioritairement pour alimenter des consommateurs acceptant une tension variable tels que par exemple un dispositif de dégivrage. Cependant, dans certaines applications, la tension Vb+X pourra aussi être utilisée pour alimenter, à travers un convertisseur DC-DC dédié (non représenté), un consommateur demandant une tension continue stable, par exemple un dispositif autoradio alimenté sous 12 V. De plus, la tension Vb+X dans certaines applications est aussi utilisable pour alimenter avec une tension supérieure à 12 V la machine électrique tournante 10 fonctionnant en mode démarreur ou moteur.

Comme cela est représenté à la Fig.1, la machine électrique tournante 10 est couplée mécaniquement, liaison 101, à un moteur à combustion interne MT du véhicule. Outre les modes de fonctionnement en démarreur et en alternateur, dans ce système 1, la machine 10 est apte à fonctionner également en mode de freinage récupératif et en mode d'assistance en couple.

Dans le mode de freinage récupératif, la tension de sortie délivrée par la machine 10 est variable, typiquement entre 16 et 60 volts dans cette forme de réalisation.

Dans le mode d'assistance en couple, la machine 10 fournit un couple mécanique additionnel pour la traction du véhicule, en complément de celui fourni par le moteur à combustion interne MT.

Le convertisseur AC/DC 11 est un dispositif réversible et permet, lorsque la machine électrique tournante 10 doit fonctionner en mode moteur/démarreur, une alimentation de la machine 10 avec des tensions alternées triphasées obtenues à partir d'une tension continue présente aux bornes de l'unité capacitive de stockage d'énergie 12, et, lorsque la machine électrique tournante 10 doit fonctionner en mode alternateur, un redressement sous la forme d'une tension continue redressée des tensions triphasées fournies par la machine 10. Cette tension continue redressée charge l'unité capacitive de stockage d'énergie 12 et, à travers le convertisseur DC-DC 13, la batterie 2.

L'unité capacitive de stockage d'énergie 12 est ici formée essentiellement d'un pack de supercondensateurs équipés de circuits électroniques appropriés. Pour des raisons de commodité, l'unité capacitive de stockage d'énergie 12 peut aussi être désignée « pack de supercondensateurs » dans la suite de la description.

Le pack de supercondensateurs 12 autorise, en se chargeant à la tension continue délivrée par le convertisseur AC/DC 11, un stockage d'énergie électrique lorsque la machine électrique tournante 10 fonctionne en mode de freinage récupératif ou en mode alternateur. L'énergie stockée dans le pack de supercondensateurs 12 peut être restituée sur le réseau de tension Vb+X pour alimenter différents consommateurs et, dans certains cas, sur le réseau de tension Vb, à travers le convertisseur DC/DC 13, par exemple lorsque la machine 10 ne débite pas et que la batterie 2 est incapable de répondre à une sollicitation de pic de courant sur le réseau de tension Vb. De plus, l'énergie stockée dans le pack de supercondensateurs 12, comme déjà indiqué plus haut, peut être utilisée pour un démarrage du moteur à combustion interne ou une assistance en couple de celui-ci sous une tension Vb+X qui peut être très sensiblement supérieure aux 12 V classiques, facilitant ainsi une fourniture par la machine tournante 10 de couples mécaniques importants requis dans le cas de gros moteurs thermiques.

Le convertisseur DC/DC 13 est un dispositif réversible et permet, d'une part, un transfert d'énergie vers le réseau de tension Vb pour alimenter les consommateurs et charger la batterie 2 et, d'autre part, un transfert d'énergie dans le sens inverse à partir de la tension 12V de la batterie 2 pour charger le pack de supercondensateurs 12 si nécessaire et alimenter le convertisseur AC/DC 11 lorsque la machine tournante 10 fonctionne en moteur / démarreur.

Le circuit électronique de commande 14 gère le fonctionnement du système à alterno-démarreur 1 à partir d'informations représentatives de l'état interne du système à alterno-démarreur 1 et de l'état du véhicule. Un module de stratégies de pilotage est implémenté dans le circuit électronique de commande 14 de manière à piloter le système à alterno-démarreur 1. Des informations d'état et des commandes peuvent être échangées entre le circuit électronique de commande 14 et différents éléments fonctionnels du système à alterno-démarreur 1 à travers des liaisons d'échange de signaux. Des liaisons d'échange de signaux L1, L2, L3 et L4 entre le circuit électronique de commande 14 et les éléments 10, 11, 12 et 13 sont représentées à la Fig.1.

Comme montré aussi à la Fig.1, un bus de communication de données 3, par exemple de type CAN, est également prévu pour des échanges d'information entre le système à alterno-démarreur 1 et une ou plusieurs unités électroniques de commande (ECU) 4 du véhicule. Des informations telles qu'un appui sur la pédale de frein ou sur la pédale d'accélérateur peuvent ainsi être transmises au système à alterno-démarreur 1 par une unité ECU 4 à travers le bus de communication de données 3.

Conformément à l'invention, il est prévu un module de limitation de courant d'excitation maximum 140 qui est implanté dans le circuit électronique de commande 14. Dans ce système 1, le module de limitation de courant d'excitation maximum 140 est actif lorsque la machine 10 fonctionne en mode alternateur et en mode de freinage récupératif, en d'autres termes, lorsque celle-ci fonctionne comme un générateur électrique.

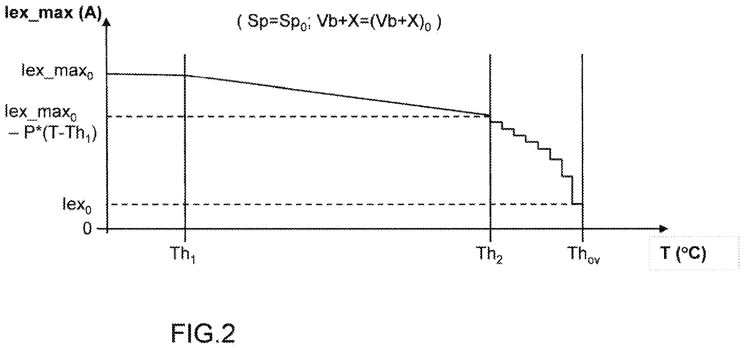

En référence plus particulièrement à la Fig.2, il est maintenant décrit en détail le fonctionnement du module de limitation de courant d'excitation maximum 140. Dans cette forme de réalisation, le circuit électronique de commande 14 est par exemple réalisé autour d'un composant électronique spécifique de type ASIC et le module 140 est implémenté dans le circuit 14 par téléchargement d'un module logiciel dans une zone de mémoire du composant électronique spécifique de type ASIC . Une ligne de téléchargement dédiée L5 est représentée à la Fig.1. Dans d'autres formes de réalisation, le téléchargement peut intervenir par exemple à travers le bus CAN ou LIN.

A travers la ligne L1, le module de limitation de courant d'excitation maximum 140 reçoit une information de température T et une information de vitesse Sp. Les informations T et Sp sont représentatives de la température et de la vitesse de la machine 10, respectivement. Typiquement, l'information de température T peut être obtenue à partir d'une thermistance intégrée dans la machine 10. L'information de vitesse Sp peut elle être obtenue à partir de signaux délivrés par des capteurs de position de rotor.

Conformément à l'invention, dans un système à alterno-démarreur du type système micro-hybride à freinage récupératif 1, la limitation du courant d'excitation maximum sera effectuée en fonction de la température T de la machine 10, mais aussi en fonction de la vitesse Sp et de la tension flottante Vb+X.

Toujours conformément à l'invention, dans un système à alterno-démarreur sans freinage récupératif, par exemple, un système à alterno-démarreur avec une fonctionnalité d'arrêt-relance automatique du moteur à combustion interne, la limitation du courant d'excitation maximum sera effectuée en fonction de la température T de la machine 10 et de la vitesse Sp de celle-ci.

La Fig.2 montre la courbe de limitation du courant d'excitation maximum Iex_max en fonction de la température T.

Cette courbe définit les plages de limitation suivantes :

**TABLEAU 1**

| **Sp** = Sp₀ et **Vb+X** = (Vb + X)₀ | |
|---|---|
| **Température T** | **Iex_max** |
| T ≤ Th₁ | Iex_max₀ |
| Th₁ ≤ T ≤ Th₂ | Iex_max₀ - P*(T-Th₁) |
| Th₂ ≤ T ≤ Thₒᵥ | ModeDégradé(T-Th₂) |
| T ≥Thₒᵥ | 0 |

Les paramètres indiqués sur le Tableau 1 sont définis ci-dessous :
- Température T = température de la machine 10,
- lex_max = courant d'excitation maximum ,
- Iex_max₀ = courant d'excitation maximum de valeur constante (palier de la courbe pour basse température),
- Th₁ = premier seuil de température correspondant au début d'une décroissance progressive du courant Iex_max,
- Th₂= second seuil de température correspondant au début d'une décroissance par palier et à une entrée dans des modes dégradés,
- Thₒᵥ = troisième seuil de température correspondant à une température de sur-échauffement qui implique une désactivation de la machine 10 de façon à éviter sa détérioration, et
- P = pente de décroissance du courant Iex_max entre les températures Th₁ et Th₂.

A chaque couple de vitesse et tension flottante (Sp ; Vb+X), résultant d'une combinaison quelconque des valeurs de vitesse et tension flottante, correspond une courbe comme celle de la Fig.2 et telle que définie par le Tableau 1 ci-dessus. La courbe de la Fig.1 correspond à des valeurs particulières Sp₀ et (Vb+X)₀ de la vitesse Sp et de la tension flottante (Vb+X). A d'autres combinaisons de valeurs particulières Sp₁, Sp₂, Sp₃...., et (Vb+X)₁, (Vb+X)₂, (Vb+X)₃ ... , correspondent d'autres courbes définies par Iex_max₀, les seuils Th₁, Th₂ et Thₒᵥ, la pente P et la grille de mode dégradé ModeDégradé(T-Th₂).

Les données à mémoriser pour chaque courbe sont ainsi limitées au strict nécessaire par rapport à une solution de cartographie complète avec une valeur de courant d'excitation maximum stockée en mémoire pour chaque combinaison de valeurs discrètes de T, Sp et Vb+X.

Comme montré à la Fig.2, la fonction ModeDégradé(T-Th₂) définit des marches d'un escalier descendant avec lequel le courant d'excitation maximum lex_max est limité graduellement jusqu'à un minimum Iex₀ correspondant à la dernière marche de limitation, juste avant une coupure totale du courant (Iex_max=0) lorsque la température de sur-échauffement Thₒᵥ est atteinte.

Il est donc ainsi défini par la courbe de la Fig.2, quatre plages de fonctionnement : une première plage (0, Th₁) dans laquelle le courant d'excitation maximum garde une valeur constante, une seconde plage (Th₁, Th₂) dans laquelle le courant d'excitation maximum décroît progressivement de manière linéaire, une troisième plage (Th₂, Thₒᵥ) dans laquelle le courant d'excitation maximum décroît par palier, et une quatrième plage (T ≥Thₒᵥ) dans laquelle le courant d'excitation est coupé.

Comme indiqué ci-dessus, dans un système à alterno-démarreur sans freinage récupératif, par exemple, sous la forme d'un système à alterno-démarreur avec une fonctionnalité d'arrêt-relance automatique du moteur à combustion interne, le paramètre Vb+X est absent. Le nombre des données stockées est alors sensiblement réduit.

## Revendications

1. Procédé de limitation d'un courant d'excitation maximum (Iex_max) dans un système à alterno-démarreur (1) pour véhicule, ledit courant d'excitation maximum (Iex_max) étant déterminé à partir d'au moins une courbe de limitation de courant d'excitation maximum préprogrammée dans un circuit électronique de commande (14, 140) dudit système à alterno-démarreur (1), **caractérisé en ce que** ladite courbe de limitation de courant d'excitation maximum introduit une limitation dudit courant d'excitation maximum (Iex_max) en fonction de la température (T) de l'alterno-démarreur (10), et ladite courbe de limitation de courant d'excitation maximum comporte au moins une première portion (Th₁, Th₂) qui est obtenue par calcul, dans ledit circuit électronique de commande (14, 140), à partir d'une égalité lex_max = lex_maxo - P*(T-Th₁) qui est préprogrammée dans ledit circuit électronique de commande (14, 140), ladite première portion correspondant à une température (T) de l'alterno-démarreur (10) qui est comprise entre un premier seuil de température (Th₁) et un second seuil de température (Th₂) supérieur audit premier seuil de température (Th₁), lex_maxo étant le courant d'excitation maximum de valeur constante , T étant la température de la machine et étant la pente de décroissance du courant lex_max entre les températures Th₁ et Th₂.

2. Procédé selon la revendication 1, **caractérisé en ce que** ladite première portion (Th₁, Th₂) correspond à une plage de réduction progressive dudit courant d'excitation maximum (Iex_max).

3. Procédé selon l'une quelconque des revendications 1 ou 2, **caractérisé en ce que** ladite courbe de limitation de courant d'excitation maximum comporte au moins une seconde portion (0, Th₁) correspondant à une plage de maintien à une valeur constante déterminée (Iex_max₀) dudit courant d'excitation maximum (Iex_max), ladite seconde portion correspondant à une température (T) de l'alterno-démarreur (10) ne dépassant pas ledit premier seuil de température (Th₁).

4. Procédé selon l'une quelconque des revendications 1 à 3, **caractérisé en ce que** ladite courbe de limitation de courant d'excitation maximum comporte au moins une troisième portion (Th₂, Thₒᵥ) correspondant à un plage de réduction par palier dudit courant d'excitation maximum (Iex_max), ladite troisième portion correspondant à une température (T) de l'alterno-démarreur (10) qui est comprise entre ledit second seuil de température (Th₂) et un seuil de température de sur-échauffement (Thₒᵥ).

5. Procédé selon l'une quelconque des revendications 1 à 4, **caractérisé en ce que** ladite courbe de limitation de courant d'excitation maximum comporte au moins une quatrième portion (≥Thₒᵥ) correspondant à un plage dans laquelle le courant d'excitation maximum (Iex_max) a une valeur nulle, ladite quatrième portion correspondant à une température (T) de l'alterno-démarreur (10) qui atteint ou dépasse une valeur de sur-échauffement (Thₒᵥ).

6. Procédé selon l'une quelconque des revendications 1 à 5, **caractérisé en ce qu'**une vitesse de rotation (Sp) dudit alterno-démarreur (10) est également prise en compte pour déterminer ledit courant d'excitation maximum (Iex_max).

7. Procédé selon l'une quelconque des revendications 1 à 6, **caractérisé en ce qu'**une tension (Vb+X) fournie par ledit système à alterno-démarreur (10) est également prise en compte pour déterminer ledit courant d'excitation maximum (Iex_max).

## Patentansprüche

1. Verfahren zur Begrenzung eines maximalen Erregerstroms (Iex_max) in einem Startergeneratorsystem (1) für ein Fahrzeug, wobei der maximale Erregerstrom (Iex_max) durch mindestens eine in einer elektronischen Steuerschaltung (14, 140) des Startergeneratorsystems (1) vorprogrammierte Kurve zur Begrenzung des maximalen Erregerstroms bestimmt wird, **dadurch gekennzeichnet, dass** die Kurve zur Begrenzung des maximalen Erregerstroms eine Begrenzung des maximalen Erregerstroms (Iex_max) in Abhängigkeit von der Temperatur (T) des Startergenerators (10) einführt, und wobei die Kurve zur Begrenzung des maximalen Erregerstroms mindestens einen ersten Abschnitt (Th₁, Th₂) umfasst, der anhand einer Gleichung Iex_max = Iex_max₀ - P*(T-Th₁), die in der elektronischen Steuerschaltung (14, 140) vorprogrammiert ist, in der elektronischen Steuerschaltung durch Berechnung erhalten wird, wobei der erste Abschnitt einer Temperatur (T) des Startergenerators (10) entspricht, die zwischen einer ersten Temperaturschwelle (Th₁) und einer zweiten Temperaturschwelle (Th₂), die größer als die erste Temperaturschwelle (Th₁) ist, liegt, wobei Iex_max₀ der maximale Erregerstrom mit konstantem Wert ist, T die Temperatur der Maschine ist und P die Steigung der Abnahme des Stroms Iex_max zwischen den Temperaturen Th₁ und Th₂ ist.

2. Verfahren nach Anspruch 1, **dadurch gekennzeichnet, dass** der erste Abschnitt (Th₁, Th₂) einem Bereich einer progressiven Verringerung des maximalen Erregerstroms (Iex_max) entspricht.

3. Verfahren nach einem der Ansprüche 1 oder 2, **dadurch gekennzeichnet, dass** die Kurve zur Begrenzung des maximalen Erregerstroms mindestens einen zweiten Abschnitt (0, Th₁) umfasst, der einem Bereich des Haltens auf einem bestimmten konstanten Wert (Iex_max₀) des maximalen Erregerstroms (Iex_max) entspricht, wobei der zweite Abschnitt einer Temperatur (T) des Startergenerators (10) entspricht, die die erste Temperaturschwelle (Th₁) nicht überschreitet.

4. Verfahren nach einem der Ansprüche 1 bis 3, **dadurch gekennzeichnet, dass** die Kurve zur Begrenzung des maximalen Erregerstroms mindestens einen dritten Abschnitt (Th₂, Thₒᵥ) umfasst, der einem Bereich einer stufenweisen Verringerung des maximalen Erregerstroms (Iex_max) entspricht, wobei der dritte Abschnitt einer Temperatur (T) des Startergenerators (10) entspricht, die zwischen der zweiten Temperaturschwelle (Th₂) und einer Überhitzungstemperaturschwelle (Thₒᵥ) liegt.

5. Verfahren nach einem der Ansprüche 1 bis 4, **dadurch gekennzeichnet, dass** die Kurve zur Begrenzung des maximalen Erregerstroms mindestens einen vierten Abschnitt (≥ Thₒᵥ) umfasst, der einem Bereich entspricht, in dem der maximale Erregerstrom (Iex_max) einen Wert Null aufweist, wobei der vierte Abschnitt einer Temperatur (T) des Startergenerators (10) entspricht, die einen Überhitzungswert (Thₒᵥ) erreicht oder überschreitet.

6. Verfahren nach einem der Ansprüche 1 bis 5, **dadurch gekennzeichnet, dass** zum Bestimmen des maximalen Erregerstroms (Iex_max) auch eine Drehzahl (Sp) des Startergenerators (10) berücksichtigt wird.

7. Verfahren nach einem der Ansprüche 1 bis 6, **dadurch gekennzeichnet, dass** zum Bestimmen des maximalen Erregerstroms (Iex_max) auch eine durch das Startergeneratorsystem (10) gelieferte Spannung (Vb+X) berücksichtigt wird.

## Claims

1. Method for limiting a maximum excitation current (Iex_max) in a starter-alternator system (1) for a vehicle, said maximum excitation current (Iex_max) being determined from at least one maximum excitation current limit curve that is preprogrammed into an electronic control circuit (14, 140) of said starter-alternator system (1), **characterized in that** said maximum excitation current limit curve introduces a limit on said maximum excitation current (Iex_max) as a function of the temperature (T) of the starter-alternator (10), and said maximum excitation current limit curve comprises at least one first portion (Th₁, Th₂) that is obtained through calculation, in said electronic control circuit (14, 140), from an equation Iex_max = Iex_max₀ - P*(T-Th₁) that is preprogrammed into said electronic control circuit (14, 140), said first portion corresponding to a temperature (T) of the starter-alternator (10) that is between a first temperature threshold (Th₁) and a second temperature threshold (Th₂) greater than said first temperature threshold (Th₁),
Iex_max₀ being the maximum constant-value excitation current, T being the temperature of the machine and P being the slope of the decrease of the current lex_max between the temperatures Th₁ and Th₂.

2. Method according to Claim 1, **characterized in that** said first portion (Th₁, Th₂) corresponds to a range of progressively reducing said maximum excitation current (Iex_max).

3. Method according to either one of Claims 1 and 2, **characterized in that** said maximum excitation current limit curve comprises at least one second portion (0, Th₁) corresponding to a range of keeping said maximum excitation current (Iex_max) at a determined constant value (Iex_max₀), said second portion corresponding to a temperature (T) of the starter-alternator (10) that does not exceed said first temperature threshold (Th₁).

4. Method according to any one of Claims 1 to 3, **characterized in that** said maximum excitation current limit curve comprises at least one third portion (Th₂, Thₒᵥ) corresponding to a range of reducing said maximum excitation current (Iex_max) in increments, said third portion corresponding to a temperature (T) of the starter-alternator (10) that is between said second temperature threshold (Th₂) and an overheating temperature threshold (Thₒᵥ) .

5. Method according to any one of Claims 1 to 4, **characterized in that** said maximum excitation current limit curve comprises at least one fourth portion (≥Thₒᵥ) corresponding to a range in which the maximum excitation current (Iex_max) has a value of zero, said fourth portion corresponding to a temperature (T) of the starter-alternator (10) that reaches or exceeds an overheating value (Thₒᵥ) .

6. Method according to any one of Claims 1 to 5, **characterized in that** a rotational speed (Sp) of said starter-alternator (10) is also taken into account in order to determine said maximum excitation current (Iex_max).

7. Method according to any one of Claims 1 to 6, **characterized in that** a voltage (Vb+X) supplied by said starter-alternator system (10) is also taken into account in order to determine said maximum excitation current (Iex_max).
